# EUROPEAN PATENT APPLICATION

(11) **EP 4 819 537 A1**
(43) Date of publication of application: **07.10.2026**
(21) Application number: 25168633.3
(22) Date of filing: 04.04.2025
(51) Int. Cl.: H04L 9/32

(54) **CRYPTOGRAPHICALLY LINKABLE IDENTITIES**

(71) Applicant: SW7 Ventures (H.K.) Limited, Causeway Bay (HK)
(72) Inventor: WILLIAMSON, Christopher Aaron Stanley, London W8 6BH (GB); RYAN, Mark, London W8 6BH (GB)
(74) Representative: Mathys & Squire

(57) **Abstract**

The present invention provides a new form of pseudonymic identity as well as protocols for a creating or initialising a verified cryptographically linkable value which can then be used to create a verified pseudonymic identity, protocols for establishing the pseudonymic identity given a verified cryptographically linkable value, and protocols for identifying co-owned pseudonymic identities.

## Description

### Technical Field

The present invention lies generally in the technical field of information security and cryptography. In particular, the present invention concerns a method of generating pseudonymic identities, wherein the link between co-owned pseudonymic identities can be revealed using a grouping query.

### Background

Many people have one or more digital identities in addition to their official/legal identity, and many digital platforms require only a digital identity, which may be unique to the platform, for a person to operate on that platform. In many contexts, the digital identity is a customer account or 'log-in' that enables interaction with a digital platform.

It is useful for a user to interact with such digital platforms without revealing their official/legal identity and this may be achieved through pseudonymic identity schemes, for instance, as described in the owner's earlier publication EP4210276A1 dated 12 July 2023. In such schemes, a user can create a pseudonymic identity which cannot be traced back to their official/legal identity unless one or more authorised entities, potentially including those involved in the issuance of the pseudonymic identity, agrees to reveal the official/legal identity that was used to create the pseudonymic identity in question. These schemes may also allow a user to create multiple pseudonymic identities from a single official/legal identity; while this provides significant freedom to the user in how they interact with one or more digital platforms, the present inventors realise that this freedom can be problematic if, for instance, the user decides to engage in malicious or problematic behaviour using one or more of a plurality of pseudonymic identities they have created; in particular, if a user is engaging in such behaviour using one of their plurality of pseudonymic identities, it may be that they are also doing so with their remaining "co-owned" pseudonymic identities. With existing schemes, it is practically impossible to identify these co-owned pseudonymic identities.

In view of this, there exists a need to be able to identify, in a practical manner, other pseudonymic identities that are owned by the owner of a pseudonymic identity that has been flagged for malicious or problematic behaviour. It would additionally be beneficial if this identification did not reveal the user's official/legal identity, as doing so may be too harsh an action in many cases of misbehaviour. It would be further beneficial if, after having their extant pseudonymic identities identified, the user is still able to create new pseudonymic identities which are not linked the earlier-identified pseudonymic identities, at least until a further round of identification occurs.

### Summary of the invention

The present invention addresses the above needs and more. For instance, the inventors realise this functionality would also be useful in, e.g., file creation; it would be beneficial to be able to link documents created on a specific computer, without necessarily revealing the specific computer. Similarly, it would be useful to be able to link photos taken by a specific digital camera without necessarily having to reveal which camera was used.

The present invention addresses these needs by providing a new form of pseudonymic identity as well as protocols for a creating or initialising a verified cryptographically linkable value which can then be used to create a verified pseudonymic identity, protocols for establishing the pseudonymic identity given a verified cryptographically linkable value, and protocols for identifying co-owned pseudonymic identities.

According to a first aspect, the invention provides a computer-implemented method for initialising a verified cryptographically linkable value suitable for use in creating a certified pseudonymic identity, the method comprising: receiving at least one value α generated by a user, wherein the at least one value α is derived at least from or relates to a root hidden value h₀; receiving one or more proofs π that assert that the at least one value α is derived at least from or is related to h₀; verifying the one or more proofs π to confirm that the at least one value α is derived at least from or is related to h₀; and in response to the verification succeeding, indicating approval of the at least one value α.

According to a second aspect, the invention provides a computer-implemented method for initialising a verified cryptographically linkable value suitable for use in creating a certified pseudonymic identity, the method comprising: generating at least one value α, wherein the least one value a is derived at least from or relates to a root hidden value h₀; generating one or more proofs π that the least one value α is derived at least from or relates to a value h₀; and providing the one or more proofs π to an issuing entity for the issuing entity to verify the one or more proofs π and approve the at least one value α.

According to a third aspect, a computer-implemented method for creating a pseudonymic identity based on a root hidden value h₀, the method comprising: generating a value V' which is derived at least from the root hidden value h₀; generating a value H' which is derived at least from the root hidden value h₀ in a different manner to V'; generating one or more proofs π_{E} that proves that V' and/or H' is derived at least from root hidden value h₀; and creating a data structure comprising V', the one or more proofs π_{E} and H', wherein the data structure acts as the pseudonymic identity.

According to a fourth aspect, a computer-implemented method for linking pseudonymic identities within a collection of pseudonymic identities PI₁...PIₙ, each pseudonymic identity PIᵢ comprising a value Vᵢ and at least one encrypted value, wherein Vᵢ and the at least one encrypted value are both derived at least from a hidden value h₀, the method comprising: receiving an indication of a pseudonymic identity PIⱼ in the collection; triggering a decryption request based on the indicated pseudonymic identity to obtain a decrypted value; computing, using the decrypted value, one or more candidate matches for values (V₁, ..., Vₙ) of pseudonymic identities in the collection; and identifying a subset of the collection, said subset comprising each pseudonymic identity PIₖ that contains one of the candidate matches; and outputting the identified subset.

### Brief Description of the Figures

Figure 1 shows a pseudonymic identity according to an example of the invention.
Figure 2 shows a relationship between hidden values of a sequence of hidden values and the results of the initialising, successor, and linking functions.
Figure 3 shows the initialising protocol according to an example of the invention.
Figure 4 shows an establish protocol for creating the pseudonymic identity according to the invention.
Figure 5 shows a grouping query according to an example of the invention.

### Detailed Description

Before describing the invention in detail, it would be helpful to discuss a number of relevant terms.

First, the term pseudonymic identity is used herein to describe a form of identity which can be repeatedly pseudonymised to create new pseudonymic identities. The pseudonymic identity typically takes the form of a data structure or construct which comprises a series of data objects, e.g. values, text, etc. Collectively, these data objects act to provide a functional form of identity in a similar way that collections of data objects can form e.g., digital bank accounts and blockchain ledger accounts. The data objects of this data structure may be stored in one location (either in digital form, or less likely, in physical form) or they may be located across a plurality of locations (for instance, if the data structure is split up over in a cloud-computing environment or several locations within a given blockchain ledger).

These data objects enable the pseudonymic identities to be linked to other identities including, for instance, another form of non-pseudonymic identity and/or other pseudonymic identities. However, as is explained herein, the data objects can be presented in a manner which hides or disguises these links unless suitable queries are made. Accordingly, a pseudonymic identity will usually appear to be unlinked to any non-pseudonymic identity or other pseudonymic identity when viewed by anyone other than the owner of the pseudonymic identity. A given data object can be "broken" or otherwise decrypted to either directly reveal a link to another identity or to provide a useful hint which can then be used to reveal the link. In order for the pseudonymic identity to be trusted by an observer, there may be one or more proofs associated with the pseudonymic identity. These one or more proofs can be verified by the observer to assure them that the pseudonymic identity is correctly constructed and can be trusted; the one or more proofs may also assure the observer that the pseudonymic identity may be "breakable" to uncover one or more links to other identities, whether the other identities be a real identity, another pseudonymic identity, or both.

As discussed above, a pseudonymic identity may be linked to other pseudonymic identities. Alternatively or in addition, the pseudonymic identity may be linked to one or more "real-world" identities depending on the context of its use. For instance, if the pseudonymic identity is used by a person to interact with an online platform, the "real-world" identity may be a form of personal information. As used herein, "personal information" refers to information that characterises an individual. For example, personal information may be an individual's name, residency or nationality. Alternatively, the personal information may be an account detail, such as a social media account (e.g. on Facebook, or Twitter), or a public identifier, such as a writer's pen name. Alternatively, the personal information may be an IP address associated with an individual's device. In some instances, personal information may be identifying information that that enables the official identity of a natural or legal person to be identified. For a natural person, examples of identifying information include a passport, driving licence or birth certificate. For a legal person such as a company or a trust, identifying information may be original articles of incorporation or an original deed of trust.

In other instances, the pseudonymic identity may not be used by a person directly, but may instead be used to "tag" a file or a photo. In such cases, the "real-world" identity may be a serial number of the computer or the software used to produce the file, or the serial number of the digital camera used to take the photo.

It follows from the above that the owner or user of the pseudonymic identity may be a person who uses the pseudonymic identity to, e.g., interact with an online platform. However, in the case of the real-world identity being a serial number of a device or software, the owner or user could also be considered to be the device or software. In such cases, it is likely that the device manufacturer or software issuer will perform the steps necessary to initialise the device or software's pseudonymic identity functionality and may therefore also be considered the owner or user, at least in this context.

At least some of the data objects contained within the data structure may be present as values, for instance, computer-readable values. These values may be in the form of any common computer-readable data type; for instance, the values may be represented by bits and/or bytes. Unless otherwise specified, these values can be of any data type, including integer, character, floating point, and other data types known to the skilled person. Data types can be consistent across values or be different. The skilled person would be able to implement the invention regardless of the data type used for any given value.

As mentioned, the pseudonymic identities of this invention may rely on the use of one or more proofs to assert a fact, whereby this fact is intended to assure or convince an observer that the pseudonymic identity has been correctly constructed, e.g., that it has been constructed in accordance with an agreed protocol or framework. For instance, the pseudonymic identity may purport to meet the requirements of a given platform or framework; the one or more proofs may assert this as a fact, thereby assuring the observer that the pseudonymic identity has in fact been constructed to meet the requirements of the platform or framework. In other cases, there may be no fixed platform or framework, but the pseudonymic identity may comprise one or more proofs asserting that it is fact that it has been constructed to have specific underlying characteristics, wherein verifying these proofs assures an observer that the pseudonymic identity can be trusted.

These proofs can take many forms. For instance, the proof can comprise text which explains why the asserted fact is true or correct; this text can be in a digital and/or computer-readable form (e.g. encoded character type values). It is possible, although less likely, that the proof is provided in physical form (e.g. hand-written); in such cases, if the pseudonymic identity is in a computer-readable format, it may comprise a link or a pointer to the physical-form proof. The proof can alternatively, or in addition, take the form of a sequence of technical or mathematical steps (e.g. arithmetic) which prove the fact in question. The proof may also simply comprise one or more values of the types discussed above; in such cases, the proof may be constructed in a manner known to the observer (e.g. according to an established protocol), in which case the observer also knows how to interpret this type of proof consisting of one or more values. Proofs may also comprise a set of mathematical constructs or values, which together with public parameters of the proving scheme, allow anyone who holds the proof to verify its correctness and interpret its meaning.

In this invention, it is particularly useful for the proofs to be "zero-knowledge". A zero-knowledge proof is a cryptographic protocol that allows one party (the prover) to prove to another party (the verifier) that a statement is true without revealing any information beyond the validity of the statement itself. Therefore, a ZK proof allows the user to prove correct construction of, e.g., a pseudonymic identity without exposing the underlying data.

At a high level, ZK proofs work through the following mechanism: The prover converts a computational statement (such as "I know the private key corresponding to this public key" or "This identity was constructed according to the correct rules") into a mathematical form. Through a series of cryptographic operations and interactions, the prover demonstrates knowledge of a solution without revealing the solution itself. The verifier can confirm with high probability that the prover possesses the claimed knowledge, without learning what that knowledge is.

One type of ZK proof is a ZK-SNARK (Succinct Non-interactive Arguments of Knowledge), which are a specific type of ZK proof that provides succinct proofs (small size) and non-interactivity (no back-and-forth communication required between prover and verifier). STARKs are also succinct ZK proofs, but use different techniques that are plausibly post-quantum secure. Here succinct is defined in terms of a) the computational complexity to verify the proof relative to b) the computational complexity required to verify the fact asserted by the proof assuming that the information underlying the fact is available to the verifier. For instance, in view of its construction, a ZK proof may take 5 steps to verify, whereas if the observer were verifying the asserted fact based on its underlying information, it may take 10 steps to verify. The skilled person is well aware of the concept of succinctness. In the context of this invention, succinct means that the steps necessary to verify the proof grow sub-linearly with respect to the number of steps necessary to verify the fact based on its underlying information. In some instances, the number of steps necessary to verify the proof may remain constant regardless of the computational complexity of the fact.

ZK proofs are well-established cryptographic objects and were first introduced in 1985, with widespread usage of ZK proofs from 2014 onwards. ZK-SNARKS and ZK-STARKS were introduced around 2012 and 2018, respectively. Today, a large number of blockchain applications, privacy systems, and identity solutions make use of ZK proofs and such ZK proofs have been routinely taught in undergraduate and graduate level cryptography courses. Moreover, many libraries exist to allow cryptographers to construct ZK proofs without needing to re-implement the core algorithms; such libraries include libsnark, ZoKrates, and gnark. Tools to aid in implementation of ZK proofs include Circom, SnarkJS, StarkWare's Cairo language, and zkSync's compiler.

The above information is provided to provide a brief background on ZK proofs. The skilled person is already well aware of the workings of zero-knowledge proofs and how to implement them. As an alternative to the use of zero-knowledge proofs, any or all of the one or more proofs employed in this invention may be witness indistinguishable proofs. Witness indistinguishable proofs are similar to zero-knowledge proofs, although weaker; in witness indistinguishable proofs, the verifier of the proof will not be able to distinguish between different witnesses used to prove a given fact. The skilled person is well aware of witness indistinguishable proofs and how to implement them. In embodiments of the invention, any or all of the one or more proofs can comprise either a zero-knowledge proof or a witness indistinguishable proof.

As discussed above, it was noted that a pseudonymic identity may be breakable to directly reveal a linked identity or a linked set of pseudonymised identities or to reveal a hint which may then be used to uncover the linked identity. It may therefore be said that the pseudonymic identity can be broken to reveal "hidden" information; this "hidden" information can be revealed if an observer is authorised to take the required steps in respect of a pseudonymic identity to reveal said information. This information is "hidden" in the sense that it is intended that no party other than the owner or user of the pseudonymic identity, or an authorised stakeholder, knows the content of the information. Moreover, when the pseudonymic identity is used in a manner that makes it (and its data objects) visible to observers (e.g. when it is published or involved in a transaction), the "hidden" information is not visible to these observers; instead, one or more of the observable data objects must be broken or queried to reveal the "hidden" information. For completeness, even if this "hidden" information is widely known, the pseudonymic identity can still be validly constructed according to the present invention, although the resulting pseudonymic identity will likely be insecure. This is because if an untrusted observer possesses the hidden information, they may already know the link between the pseudonymic identity and the one or more other identities (e.g. if the hidden information is the link) or they may easily break the pseudonymic identity to reveal said one or more identities (e.g. if the hidden information is a hint towards obtaining the link). In practice, the user or owner may choose to share their "hidden" information with one or more parties they trust not to reveal their "hidden" information. In any case, for the purposes of this invention, information is still considered "hidden" information if it is concealed by the pseudonymic identity and/or if the pseudonymic identity can be broken or queried to reveal the "hidden" information.

The pseudonymic identities of the present invention will now be discussed in greater detail.

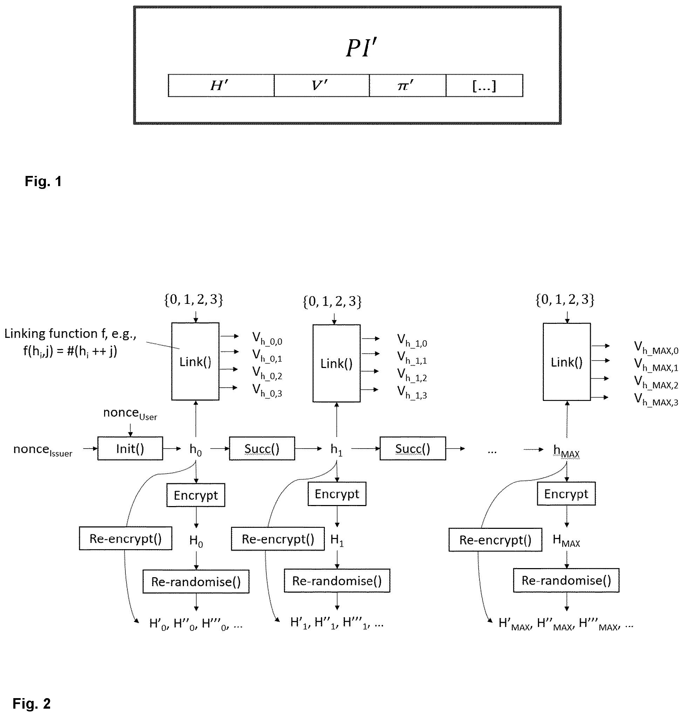

As shown in Fig. 1, at its most basic, a pseudonymic identity may comprise, or may be, a mathematical or data construct comprising a collection of data objects, including values, parameters, and one or more proofs (which may themselves be values). This collection of data objects can be used by a user to interact with a digital platform and/or other identities, or may act as a marker or tag for a given object (e.g. data file, image, etc). The same user or owner may own a collection of pseudonymic identities, which may therefore be considered co-owned and therefore "linked" to one another; these co-owned pseudonymic identities may all conceal at least one piece of common "hidden" information, which may be revealed by a suitable grouping query to reveal the link between the pseudonymic identities.

As shown, the data construct for a given pseudonymic identity PI' may comprise a concealing value H', a linking value V', and a proof π'. The data construct is made publicly available when it is used, therefore the aforementioned concealing value H', linking value V', and proof π' are also made publicly available. The data construct may also comprise other values, e.g., for use in signing transactions or signing messages, or may comprise further proofs. As discussed earlier, the pseudonymic identity may comprise underlying "hidden" information; however, this "hidden" information is not directly included in the data construct, else it would be revealed when the data construct is made publicly available. Instead, the "hidden" information may be concealed by, e.g., the concealing value H'. In this manner, the concealing value H' may be "broken" to reveal the "hidden" information. The pseudonymic identity may also comprise value D which may also be broken to reveal "hidden" information, e.g. any personal information used to create the pseudonymic identity or a hint towards revealing this information. D is not essential to the present invention; in fact, it is possible for a pseudonymic identity to be created without the use of any personal information from the user/owner.

As will be described further below, the concealing value H' and the linking value V' may both share a technical relation with at least one other value or parameter. In particular, H' and V' may both be derived at least from a common root hidden value h₀, albeit each is derived at least from root hidden value h₀ in a different manner. A co-owned pseudonymic identity may exist, wherein the pseudonymic identity comprises a different concealing value H" and different linking value V"; however, concealing value H" and different linking value V" will nonetheless be derived at least from the same hidden value h₀ as concealing value H' and linking value V'. This property allows allow co-owned pseudonymic identities to be linked in a practical manner using a grouping query. In the context of this application, unless otherwise specified, "derived from" can mean that, for example, "a concealing value H" may be derived only from hidden value h₀ (e.g. one or more functions applied to h₀) or it may mean derived from h₀ and at least one unspecified value (e.g. one or more functions applied to h₀ and at least one unspecified value). In some cases, a chain of derivations may occur in which there exists, e.g., values X, Y, and Z, wherein Z is derived from Y and Y is derived from X; in such cases, Z can be said to be derived from both Y and X. Such derivations, or chains of derivations, may be deterministic or may comprise a non-deterministic function, or both. For instance, as discussed below, a value H may be obtained by encrypting a hidden value h (typically encryption is, in effect, non-deterministic), which may itself be derived from h₀; thus, this chain may involve h being deterministically derived from h₀ and H being non-deterministically derived from h.

It is useful if any given person or user can only create or have a single root hidden value h₀. This can be enforced by a verification or KYC process which ensures that, e.g., a given passport will only have one root hidden value h₀ associated with it. Where the user is a device or software, it may be ensured that its serial number will only be associated with one root hidden value h₀. In this manner, when a grouping query is performed (discussed in greater detail later) and all existing pseudonymic identities based on h₀ are revealed, it can be better assured that the owner or user does not have other pseudonymic identities based on a different root hidden value h₀.

The grouping query is now discussed as a high level example. In particular, when a pseudonymic identity is subject to a grouping query, concealing value H' may be "broken" (e.g. decrypted or undone) to uncover a hidden value h, which may be identical to h₀ or may instead be derived from h₀. The linking values V', V", V"', etc will also be derived from this same hidden value h and are constructed in such a manner that an observer can generate V", V‴, etc (they will already have V') if they have broken H' to reveal h. Once the observer has generated linking values V", V"', etc, the observer can search or examine all publicly available pseudonymic identities (constructed according to the same framework) for those having the linking values V", V"', etc. Only pseudonymic identities that have a linking value V derived from hidden value h will be found by this search. Pseudonymic identities owned by a different user/owner will have linking values V derived from a different root hidden value and therefore based on a different hidden value. Thus, the use of linking value V allows co-owned pseudonymic identities to be identified in a practical manner which reduces the necessary computational expenditure.

This use of linking value V has a further benefit in that the involvement of other entities in performing the grouping query may be minimised. In particular, each of concealing values H', H", H'", etc, may have been generated with the assistance of another party, e.g. a trustee entity; the cooperation of the respective other party may therefore be necessary to break each of H', H", H'", etc to reveal the underlying hidden values. However, the existence of linking value V means that once the concealing value H' of a queried pseudonymic identity has been broken to reveal hidden value h (which may involve the assistance of another party), the querier can by themselves construct linking values V", V"', etc, to search for and find any co-owned pseudonymic identities without the further interaction of other parties being necessary. This further reduces the necessary interaction between parties and the total amount of effort (e.g. communicational and/or computational effort) to perform a grouping query.

As discussed above, H' may be derived from a hidden value h, where h may be identical to a root hidden value h₀ or may instead be derived from h₀. H' may be obtained or generated in a number of ways. For instance, H' may be generated by applying an obfuscating function to an existing concealing value H which is itself an encryption of h. Herein, an obfuscating function refers to any function which changes a ciphertext whilst preserving the underlying plaintext; therefore, an example of an obfuscating function is a re-randomising function. Obfuscating or re-randomising H, wherein H is an encryption of h, will result in H', wherein both H and H' can be broken or decrypted to reveal the same underlying plaintext h. An alternative approach to generating H' is to simply encrypt h; provided the encryption process introduces randomness (which they typically do), concealing value H' will differ from any concealing value H, H", etc, also generated by encrypting h. The skilled person will be aware of other techniques for generating concealing value H' such that it is different from other concealing values H, H", etc, yet all of these can still be broken, decrypted, undone, etc, to reveal a common hidden value h.

The encryption function is one cryptographic technique that can be used to generate concealing values H, H', etc from h. The encryption function will typically use the public key of one or more trustee entities to produce the ciphertext; therefore breaking, or decrypting the ciphertext to reveal the plaintext will require use of a corresponding private key or private keys of the one or more trustee entities. A threshold encryption/decryption scheme may be used to encrypt h to generate H; in such schemes, a threshold subset of a plurality of trustees is required to co-operate to decrypt H to h. In these schemes, the plurality of trustee entities will have typically already generated a single threshold public key themselves, wherein this single threshold public key is sufficient to generate the ciphertext (e.g. to generate H from h); however, when decrypting the ciphertext, one or more trustee entities may need to use their private keys to decrypt the ciphertext. In threshold schemes, the number of trustee entities required to use their private keys to decrypt the ciphertext may be less than the number of trustee entities that contributed to the threshold public key. Hence a threshold scheme may be defined by a number n, the number of trustee entities participating in the scheme, and t, the threshold number of trustee entities required to participate in the decryption. A dynamic threshold encryption/decryption scheme may also be used to encrypt h to H; a dynamic threshold encryption/decryption scheme is similar to the aforementioned non-dynamic scheme, except that the person wishing to encrypt h will typically generate the threshold public key themselves and communicate trustee-specific private keys to each relevant trustee. The skilled person is well aware of multi-trustee schemes, including threshold and dynamic threshold encryption/decryption schemes, and would find them trivial to implement. Typically, where multiple trustee entities are involved in decryption, they will each issue a partial decryption result; the recipient of the partial decryption results may therefore be required to combine the results using a known combining function to obtain the plaintext.

The above discussion introduces the fundamentals of a pseudonymic identity, these fundamentals being sufficient to provide a useful / functional pseudonymic identity. However, it is advantageous if the pseudonymic identity can assert that it has been "certified" or "verified", for instance by an official entity (e.g. an issue entity) which may be responsible for regulating pseudonymic identities and/or checking that they are validly constructed. This may be achieved by proving to the issue entity that at least one of the values underlying the pseudonymic identity has been validly constructed and thereby gaining an indication of approval from the issue entity; the pseudonymic identity itself may contain a reference to this approval, thereby assuring observers that the pseudonymic identity has been validly constructed.

This approval process or "initialisation" process may be used to "initialise" (approve, certify, etc) a value so that it can be used or referenced in the creation of a pseudonymic identity. This process does not necessarily need to occur before the pseudonymic identity is created; for instance, a pseudonymic identity and then at least one of its underlying values can be approved or initialised. This initialisation process may involve proving to the issue entity that a value, e.g. a concealing value H or a linking value V, has been generated or derived from root hidden value h₀. Therefore, the process may comprise submitting one or more proofs π_{I} that value H and/or V has been generated or derived from h₀. The respective value, H and/or V, may be sent to the issue entity alongside the proof π_{I}, although this is not necessary. The initialisation process may therefore involve the issue entity assessing this proof π_{I} and, if it accepts the one or more proofs, indicating its approval of H and/or V.

The initialisation process may further comprise verifying that h₀ has been generated in an acceptable or agreed manner. For instance, a given framework may require h₀ to be generated using a pseudorandom, random, or arbitrary value generated by the user (a "nonceᵤₛₑᵣ") and/or by the issue entity (a "nonceᵢₛₛᵤₑᵣ"). The one or more proofs π_{I} may therefore include proof that h₀ has been generated from nonceᵤₛₑᵣ, nonceᵢₛₛᵤₑᵣ, or both (e.g. a combination) of nonceᵤₛₑᵣ and nonceᵢₛₛᵤₑᵣ. The one or more proofs π_{I} may further comprise proof that h₀ has been correctly generated from nonceᵤₛₑᵣ, and/or nonceᵢₛₛᵤₑᵣ, wherein "correctly" means accordingly to an agreed protocol or using an agreed technique or mathematical function; for instance, the given framework in which the pseudonymic identity is to be created may specify how h₀ should be generated from nonceᵤₛₑᵣ, and/or nonceᵢₛₛᵤₑᵣ.

To enable this aspect, the initialisation process may comprise the issue entity generating nonceᵢₛₛᵤₑᵣ and sending it to the user; the issue entity may also request that another entity generates nonceᵢₛₛᵤₑᵣ and sends it to the user or the issue entity may instruct the user to generate nonceᵢₛₛᵤₑᵣ themselves and inform the issue entity of nonceᵢₛₛᵤₑᵣ. The initialisation process may also comprise the user generating, or otherwise obtaining, nonceᵤₛₑᵣ. Typically, the user should not send nonceᵤₛₑᵣ to the issue entity, else the issue entity may be able to generate h₀ themselves. Instead, the user may create a cryptographic commitment on nonceᵤₛₑᵣ and send this commitment to the issue entity. In such scenarios, the one or more proofs π_{I} may comprise proof that the commitment is a commitment on nonceᵤₛₑᵣ. In generating h₀ from nonceᵤₛₑᵣ and/or nonceᵢₛₛᵤₑᵣ, a range of techniques can be used; for instance, h₀ can be derived by applying a cryptographic function to nonceᵤₛₑᵣ or nonceᵢₛₛᵤₑᵣ or to a combination (e.g. a concatenation) of nonceᵢₛₛᵤₑᵣ and nonceᵤₛₑᵣ. The cryptographic function can comprise a cryptographic hash function. Where this specification refers to a cryptographic hash function, any cryptographic hash function can be used; examples of suitable cryptographic hash functions include SHA-2, SHA-3, Whirlpool, Blake-2, MiMC, and Poseidon. Where any of the one or more proofs comprises a ZK-SNARK, and one or more hash functions are employed, it may be particularly beneficial to use MiMC or Poseidon, although many other options exist.

More generally, where both the issuer and the user contribute to the creation of h₀ (e.g. by contributing randomness), this can be achieved using any process in which both the user and issuer are involved and which results in a random or pseudorandom value for h₀. This can include each generating a pseudorandom, random, or arbitrary value (or simply each selecting an arbitrary value) and applying a function to the combination of these values. The skilled person would be aware of countless ways in which such a value h₀ could be generated in this manner. For instance, both parties could commit to individually chosen random bit strings, and then the party to compute h₀ will be made privy to all decommitted values and combine them using an exclusive-OR operation bit-by-bit to obtain a random bit string of the same length.

As described above and further below, the one or more proofs π_{I} may comprise a zero-knowledge proof, such that the information underlying the asserted fact is not revealed. For instance, depending on the fact being asserted, this may mean that h₀ is not revealed and/or that the values nonceᵢₛₛᵤₑᵣ and/or nonceᵤₛₑᵣ are not revealed. In other cases, the issue entity may be a party trusted by the user, in which case the proof may not be zero-knowledge. If the issue entity is not trusted by the user and the proof is not zero-knowledge, the discussed protocols will still work, although the resultant pseudonymic identities may be less secure, and potentially significantly less secure.

Regardless of the form the proof takes, if the issue entity accepts that the proof is valid, it may indicate its approval of H and/or V. If the issue entity has been provided H and/or V it may indicate its approval by signing H and/or V (i.e. using its private key) and returning the signed values to the user, and/or by publishing H and/or V (and optionally their signatures, if signed). Publishing H and/or V may comprise generating a blockchain transaction which indicates their approval. The issue entity may also inform the user of the approval of H and/or V.

Once the value H and/or V has been indicated as approved, a pseudonymic identity may reference this approval as evidence that it is a certified or verified pseudonymic identity. For instance, a pseudonymic identity having values H' and V' may also comprise one or more proofs that there exists an approved value H and/or V derived from the same root hidden value h₀ as H' and V'. These one or more proofs may comprise a zero-knowledge proof which proves that approved value H and/or V exists without revealing what H and/or V is.

As discussed above, a grouping query can be made in respect of a given pseudonymic identity to link or group co-owned pseudonymic identities (e.g. all derived from the same root hidden value h₀). However, once a grouping query has been performed, it would be advantageous to allow a user to create further pseudonymic identities after their existing pseudonymic identities have been revealed. One way of achieving this is to create pseudonymic identities in generations, as will be described in more detail later. If a given framework allows pseudonymic identities to be created in generations, a successful identification query can link pseudonymic identities to other co-owned pseudonymic identities that exist in same or earlier generations. However, after the identification query has been carried out, a user is then (and potentially only then) able to create one or more a new pseudonymic identities, with these pseudonymic identities existing in a new generation. The pseudonymic identities in the new generation may appear outwardly distinct from each other and co-owned pseudonymic identities of earlier generations, at least until a further grouping query has occurred. If a further grouping query is carried out, the user can again create new pseudonymic identities in a further new generation, as discussed below.

This generation functionality may be provided through use of a plurality of hidden values h which are all derived from the same root hidden value h₀; for instance, there may exist a collection of hidden values h₀,hₐ,...h_{z} all derived from root hidden value h₀. The existence of multiple hidden values h means that for multiple pairs of concealing values H and linking values V (e.g. Hₐ and Vₐ, H_{b} and V_{b}, etc) each pair can be generated from different hidden values of the collection, with the use of different hidden values signifying that the pairs exist in different generations. For instance, a number of pseudonymic identities may exist in a first generation and respectively comprise the pairs H'ₐ and V'ₐ, H"ₐ and V"ₐ, etc, while a number of pseudonymic identities may exist in a second generation and respectively comprise the pairs H'_{b} and V'_{b}, H"_{b} and V"_{b}, etc. Therefore, each hidden value of the collection of hidden values h₀, hₐ,...h_{z} may be considered to relate to a specific generation of pseudonymic identities.

A successful grouping query in respect of a first generation pseudonymic identity comprising pair H'ₐ and V'ₐ may derive hidden value hₐ from H'ₐ, whereby hₐ may be used to compute linking values V"ₐ, V‴ₐ, etc; as described above, these linking values and may be used to search or examine a pool of pseudonymic identities to find those having linking values V"ₐ, V‴ₐ, etc (e.g. to find co-owned first generation pseudonymic identities). If a grouping query is made in respect of a second generation pseudonymic identity comprising pair H'_{b} and V'_{b}, it may be used to derive h_{b} from H'_{b}, whereby h_{b} may be used to compute linking values V"_{b}, V‴_{b}, etc; these linking values may be used to search or examine a pool of pseudonymic identities to find those having linking values V"_{b}, V‴_{b}, etc (e.g. to find co-owned second generation pseudonymic identities). As described in greater detail below, if the queried pseudonymic identity is of the second generation or later, the revealed hidden value may be used to compute the hidden values from earlier generations. In general, a grouping query made in respect of a nth generation pseudonymic identity may result in all co-owned pseudonymic identities in generations 1 to n being found. As discussed above, after a successful grouping has occurred, one or more pseudonymic identities may be created wherein the new values H' and V' are derived from a hidden value of hₐ...h_{z} other than hₐ or any other values that have been revealed.

In a more specific example of generational functionality, each of hidden values hₐ...h_{z} may be deterministically generated from another of the hidden values of hₐ...h_{z} or h₀. For instance, hₐ...h_{z} may form a sequence h₀, ..., h_{MAX} wherein each hidden value is derived (e.g. using a deterministic one-way function) from the previous hidden value in the sequence, i.e. *h* = *S*(*h*_{*-*1}) wherein *S*() may be a successor function that is consistently applied to each of hidden values h₀, ..., h_{MAX-1}. Where the hidden values exist as a sequence h₀, ..., h_{MAX} the user may be required to create pseudonymic identities having a generation corresponding to the last or final hidden value of the sequence, i.e., h_{MAX} before they can create pseudonymic identities corresponding to an earlier hidden value of the sequence. Therefore, a first generation pseudonymic identity may comprise one or more proofs that prove that it is derived from h_{MAX}. After a successful identification query has revealed, e.g., h_{MAX}, the user may be required to create a pseudonymic identity based on h_{MAX-1}, i.e. the hidden value directly preceding the hidden value revealed by the successful identification query. Therefore, a second generation pseudonymic identity may comprise one or more proofs that prove that it is derived from h_{MAX-1}, and so on. This relationship between the hidden values means that if a grouping query is performed on a pseudonymic identity having values H' and V' derived from, e.g., h_{MAX-1} (i.e. a second generation pseudonymic identity), the grouping query can also be performed in respect of the first pseudonymic identities, since h_{MAX} can be easily derived from h_{MAX-1} by applying the successor function S().

Where generational functionality is used, a given pseudonymic identity may also comprise a further concealing value H'₋₁ in addition to H'. Where H' is derived from a hidden value h of the sequence, H'₁ may be derived from hidden value h₋₁ (i.e. the hidden value preceding h in the sequence) In addition, or alternatively, a concealing value H'₋₂ may be provided, wherein H'₋₂ is derived from hidden value h₋₂ of the sequence (i.e. the hidden value preceding h₋₁, which itself precedes h in the sequence). As discussed later, this means that a grouping query may be performed on a first generation pseudonymic identity to find co-owned second and/or third generation pseudonymic identities (i.e. by breaking or decrypting H'₋₁ to h₋₁ and/or H'₋₂ to h₋₂). To avoid abuse of the grouping queries, the trustee entities that are required to help decrypt H'₋₁ and/or H'₋₂ may first verify that the hidden values associated with the previous generations (e.g. the first and/or second generations) have already been revealed before they decrypt the concealing values H'₋₁ and/or H'₋₂ associated with the second and/or third generations. Here it is noted that the subscripts ₋₁ and ₋₂ denote relative, rather than absolute, positions in the sequence; that is to say, hidden value h could be associated with the 14th generation, wherein h₋₁ is associated with the 15th generation, and h₋₂ is associated with the 16th generation (since, in this instance, as the position in the sequence moves from last to first, the generation number increases from first to last).

In the case where the hidden values form a collection of hidden values, e.g., hₐ...h_{z} these may not initially form a sequence. The user may be allowed to choose which of hidden values hₐ...h_{z} they use to create a new generation of pseudonymic identities, provided that the chosen hidden value has not already been revealed. However, it is still possible to enforce a pseudo-ordered sequence, even if the user is able to choose which of hₐ...h_{z} to use for a new generation of pseudonymic identities. For instance, on creating a pseudonymic identity in a new generation (associated with, say, hidden value h_{f}), the user may be required to encode a link to the previous generation pseudonymic identities (associated with, say, hidden value hₓ), wherein h_{f} is used to encode or hide this link; that is to say, on revealing h_{f}, h_{f} may be used to reveal the link to the earlier generation. The skilled person would be able to find other ways of creating a discoverable link between generations of pseudonymic identities in instances when the hidden values exist in an initially non-sequential form, e.g. as a collection of hidden values hₐ...h_{z}.

In a given framework, the collection of hidden values h₀,hₐ,...h_{z} or sequence h₀, h₁,...h_{MAX} may be finite in number, in which case the total number of possible generations is also finite. In a given framework, there may also be a limit C to the total number of pseudonymic identities which can be created in a given generation.

A given pseudonymic identity may be hosted, stored, or published in a location accessible to the public, or to a subset of the public authorised to make use of the platform in question. As discussed above, only the data objects in the data structure will be published. The hidden values h (e.g. h₀, h₁,...h_{MAX}) or other secret values (e.g. nonceᵤₛₑᵣ) will not be published in the process of hosting, storing, or publishing the pseudonymic identity, else this could render the pseudonymic identity insecure; the same applies for any other values which should be kept secret or hidden to preserve the security of the pseudonymic identity, e.g. nonceᵤₛₑᵣ, nonceᵢₛₛᵤₑᵣ, and/or any values to which the linking function is applied to create the various linking values V. However, as and when another party performs a grouping query, this party or the ledger may choose to publish or store the revealed hidden value h.

The pseudonymic identity may be stored on a blockchain ledger or other online database form; its linking value V may be stored in a manner that makes it more efficient to find than the other values of the pseudonymic identity. For instance, V may be stored using a Merkle tree and may be located on a leaf of a Merkle tree. The Merkle tree may be hosted on the blockchain ledger or other online database. The published value V may comprise a link or pointer to the location at which the other values of the pseudonymic identity are stored. This allows the grouping query to be run more efficiently, since the Merkle tree is configured to be easily searched, relative to, e.g., a blockchain ledger or a database. Therefore, it is relatively efficient to search through linking values V and it is also relatively easy to use the linking values V that are found to find the remaining components of the respective pseudonymic identities.

A specific embodiment of the invention which allows for multiple generations of pseudonymic identities is now presented.

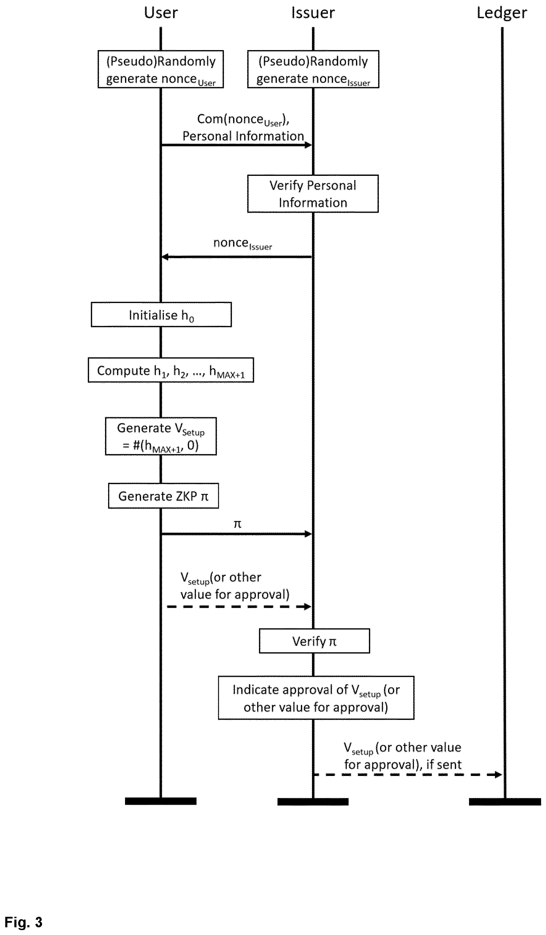

As shown in Fig. 3, in this embodiment, the user generates a nonce_{User}, which is a random, pseudorandom, or arbitrary value, creates a commitment Com committing the user to this nonce_{User}, and sends Com to an issue entity, together with personal information of the user. The issue entity verifies this personal information themselves or by outsourcing this verification step. After verifying the personal information, the issue entity stores the personal information in a database. The issue entity associates the personal information with a first set of data, stores this association, and encrypts the first set of data using the public key of one or more trustee entities. The first set of data may, for instance, be a serial number or hash which can be used to find the verified personal information in a database. The issue entity optionally signs the encrypted first set of data D. The issue entity sends the (optionally signed) encrypted first set of data D to the user together with a nonce_{Issuer}, which is a random, pseudorandom, or arbitrary value. The nonce_{Issuer} may be generated by the issue entity after verifying the personal information or may have been generated beforehand; the nonce_{Issuer} may also be generated by an entity other than the issue entity and then relayed to the user by the issue entity.

Once the user possesses nonce_{Issuer}, the user computes a hidden value h₀ using a deterministic one-way initialising function; the initialising function *I*() may take inputs and produce outputs of the form *I*(*nonce_Issuer,nonce_User*); however, the initialising function may also take other inputs in addition to nonce_{Issuer} and/or nonce_{User}. An example of such a function is *h*₀ *= I*(*nonce_Issuer,nonce_User*) *= g*^{#(*nonce_Issuer ++ nonce_User*)}, where *g* is a group generator, the superscript (^) denotes a modular exponentiation function, # is a cryptographic hash function, and ++ is a concatenation function; another example is *h*₀ *= I*(*nonce*_*Issuer,nonce_User*) *= g*^{*#*(*nonce_User++ nonce_Issuer*)} wherein the concatenation order has been reversed. It is advantageous if the successor function distributes its outputs substantially or entirely uniformly over its range given inputs that are distributed substantially or entirely uniformly over the domain; thus the successor function may be a deterministic one-way function that distributes its outputs substantially or entirely uniform over the range of the function given inputs that are distributed substantially or entirely uniformly over the domain. In this instance, this can be achieved by choosing the cryptographic hash function (#) and the group such that the range of the cryptographic hash function is at least as large as the size of the group, and advantageously, the range of the hash function is an exact multiple (or close to an exact multiple) of the size of the group - this can be particularly beneficial, by ensuring that inputs are evenly distributed over the output space of the initialising function. Thus, the initialising function may comprise a group generator raised to the exponent of a cryptographic hash function; here, the cardinality of the range of the cryptographic hash function may be identical to or an exact multiple of the cardinality of the group. If the range of the cryptographic hash function is not an exact multiple of the size of the group, then it can be made modulo to the size of the group. The skilled person is aware of many other ways of providing a uniformly distributing function. In general, the initialising function *I*() may comprise any one or more of a hash function, a modulo function, an exponentiation function, and a concatenation function; the initialising function *I*() may comprise all of these functions. The initialising function could consist of other deterministic one-way functions and the skilled person would face no difficulty in choosing and implementing another such function. This process of creating h₀ ensures that it is unique to the user; i.e. other users will have different values h₀ from which their pseudonymic identities are derived. Moreover, as discussed above, by verifying the user's personal information (or by performing other KYC checks) it is possible to ensure that any given person or user creates only one value h₀; in this way, it can be better assured that a co-owned group of pseudonymic identities revealed by a grouping query are the only pseudonymic identities owned by the user (that is, the user does not have other pseudonymic identities based on a different h₀).

Once the user has computed hidden value h₀, the user computes a sequence of hidden values h₀, ..., h_{MAX}. The user additionally computes a value h_{MAX +1}, which serves an additional sequence value. Each hidden value from h₁ to h_{MAX+1} is generated by applying a deterministic one-way successor function *S*() to the previous hidden value in the sequence; that is, h₁ is generated by applying the deterministic one-way successor function to h₀, h₂ is generated by applying the deterministic one-way successor function to h₁, and so on, until h_{MAX+1} is generated by applying the deterministic one-way successor function to h_{MAX}. The deterministic one-way successor function *S*() may be *S*(*hᵢ*) = *g*^{*#*(*h*ᵢ)} wherein *g* is a group generator, the superscript (^) denotes a modular exponentiation function, and # is a cryptographic hash function. In general, successor function *S*() may comprise a cryptographic hash function, an exponentiation function, and/or a modulo function, or any combination of these. Other suitable successor functions *S*() could be used to create h₁ to h_{MAX+1} and the skilled person would face no difficulty in choosing and implementing another such function. Like with the initialising function, it is advantageous if the successor function also distributes its outputs substantially or entirely uniformly over its range given inputs that are distributed substantially or entirely uniformly over the domain; thus, the successor function may be a deterministic one-way function that distributes outputs substantially or entirely uniformly over the range of the function given inputs that are distributed substantially or entirely uniformly over the domain. Thus, the successor function may comprise a group generator raised to the exponent of a cryptographic hash function; here, the cardinality of the range of the cryptographic hash function may be identical to or an exact multiple of the cardinality of the group.

After creating h_{MAX+1}, the user creates V_{Setup} which computed by applying a deterministic one-way linking function *L*() to a concatenation of h_{MAX+1} and the integer 0. The integer 0 is chosen for convenience and different implementations of these protocols may choose to use other values. In this case, to create V_{Setup}, *L*() is of the form *L*(*h*_{*MAX+*1}, 0)*.* An example of a suitable linking function to create V_{Setup} is *V_{Setup} = #*(*h*_{*MAX+*1} *+* + 0), wherein # is a cryptographic hash function, and ++ is a concatenation function; the concatenation could be performed in either order, although the given framework in which the pseudonymic identity is created may set the order. The user also creates one or more ZK proofs π_{I} that V_{Setup} has been validly generated, which in this case means proving that V_{Setup} is derived from h_{MAX+1} and that h_{MAX+1} has itself been correctly derived from h₀ (e.g., in this specific embodiment, by repeatedly applying the successor function to h₀ to generate h₁ to h_{MAX+1}). The user then sends V_{Setup} and proof π_{V} to the issue entity.

As a side note, the information sent to the issue entity can vary; for instance, it is possible to send only the one or more proofs π that a given value has been derived correctly with respect to a root hidden value h₀. The issue entity does not need to be sent this given value and is able to approve it as valid based on the provided proof. Later, the user can reference the approval of the given value when creating their pseudonymic identity. Alternatively, or in addition, the user can send the issue entity a V_{Setup} derived from h_{MAX} rather than h_{MAX+1} with a correspondingly altered one or more proofs π_{I}. Alternatively, or in addition, the user can send any one of, or any combination of, H_{MAX+1}, H_{MAX,} or H₀ (i.e. the concealing values generated from h_{MAX+1}, h_{MAX}, and h₀, respectively) to the user with one or more proofs π_{I} that the value sent has been correctly constructed. Similarly, one or more proofs π could be sent that H_{MAX+1}, H_{MAX,} or H₀ has been correctly constructed without sending H_{MAX+1}, H_{MAX,} or H₀ to the issue entity. In general, it is advantageous to send one or more proofs π that a value towards the end of the sequence has been correctly constructed; for instance, it is useful to prove that H_{MAX+1} has been derived from h_{MAX+1}, which has itself been derived from h₀ by successive applications of the successor function, since the values further down the sequence (e.g. h_{MAX}) may be considered implicitly valid.

On verifying and accepting this proof π_{I}, the issue entity publishes V_{Setup} to a Merkle tree (i.e. by creating a leaf on the tree), thus indicating the issue entity's approval of V_{Setup} (and implicitly the sequence of values h₀ to h_{MAX+1}). This concludes the issue entity's involvement in initialising the pseudonymic identity.

As noted above, the issue entity may alternatively or additionally be provided a value other than V_{Setup}, for instance a concealing value Hᵢ derived from one of the hidden values h₀ to h_{MAX+1}. In this case, the issue entity may either publish the other value (e.g. Hᵢ) to the ledger or may otherwise publish indication of its approval of Hᵢ. The user may also choose to, or be required to, publish the approved value or the approval of the value; this may occur in addition to the issue entity, or if the issue entity has not published either the value or its approval.

### Establishing or creating a pseudonymic identity in the first generation

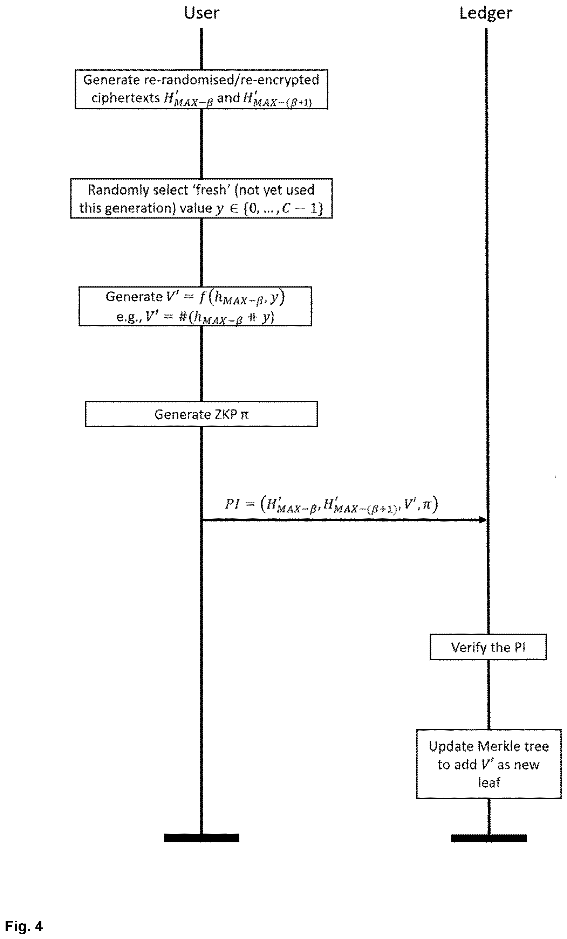

As shown in Fig. 4, once V_{Setup} has been approved, the user is able to create first generation pseudonymic identities which reference this approval of V_{Setup}. The first generation may be considered associated with hidden value h_{MAX}, at least since each first generation pseudonymic identity comprises a pair comprising guarding value H and linking value V, both of which have been generated from h_{MAX}. In general, when constructed in this manner, the nth generation of pseudonymic identities may be considered associated with hidden value h_{MAX-(n-1)}.

A user can create a first generation (i.e. corresponding to h_{MAX}) pseudonymic identity by re-randomising H_{MAX,} wherein H_{MAX} is the encryption of h_{MAX,} to create H'_{MAX}. The user also re-randomises H_{MAX-1,} wherein H_{MAX-1} is the encryption of h_{MAX-1,} to create H'_{MAX-1}. In both cases, H'_{MAX} and H'_{MAX-1} could also be obtained by re-encrypting h_{MAX} and h_{MAX-1}, respectively, as discussed above. The encryption of h_{MAX} to obtain H_{MAX} and the encryption of h_{MAX-1} to obtain H_{MAX-1} both use the public key of one or more trustee entities; the user performs this encryption themselves.

The user may have stored hidden values h₁, ..., h_{MAX+1} when they were created; in this case, the user can easily reference these stored values to generate, e.g., H_{MAX-1} and its subsequent re-randomisation. Alternatively, if the user has not stored h₁, ..., h_{MAX+1}, the user can easily derive any of h₁, ..., h_{MAX+1} by re-applying the successor function to h₀ the required number of times.

The user creates one or more ZK establish proofs π'_{E} which comprises proof that H'_{MAX} is derived from the root hidden value h₀ and that there exists an approved value (here V_{Setup}) also derived from the same root hidden value h₀.

The user also creates linking value V' using the linking function *L*() which, for the first generation (i.e. for hidden value h_{MAX}), is V' = *#*(*h_{MAX} +* + *y'*), wherein # is a cryptographic hash function, ++ is a concatenation function, and *y'* is an integer arbitrarily selected from a finite range of C possible values. C is a predetermined limit on the number of pseudonymic identities that can be generated in a given generation based on a given hidden value h (i.e. based on h_{MAX} for the first generation) per generation. Other suitable linking functions *L*() could be used; for instance, any deterministic one-way function could be used to create the linking value V' and the skilled person would face no difficulty in choosing and implementing another such function. The linking function *L*() does not need to be applied to the concatenation of h_{MAX} and y'; instead, it suffices that that the linking value is unique to each pseudonymic identity of a given generation and is derived from the hidden value h associated with that generation. The one or more proofs π'_{E} may also comprise proof that linking value V' has been derived from the hidden value for the current generation (e.g. h_{MAX} for the first generation) and/or that V' is derived from h₀.

To create the pseudonymic identity, the user places H'_{MAX}, H'_{MAX-1}, V' and π'_{E} into a data structure. The user then publishes this pseudonymic identity. In this specific embodiment, the user submits the pseudonymic identity to a ledger, wherein the ledger or an entity monitoring the ledger verifies that the pseudonymic identity is valid, e.g., by assessing proof π'_{E}. If the pseudonymic identity is accepted as valid, V' is added as a leaf to a Merkle tree hosted on the ledger, and the other values of the pseudonymic identity (e.g. H'_{MAX}, H'_{MAX-1}, and π'_{E}) are also stored on the ledger or some other referenced database. The entry V' on the Merkle tree may contain a reference or pointer allowing the other values to be found. In some embodiments, the hash of the pseudonymic identity is published on the ledger, but at least part or all of the pseudonymic identity is withheld from publication to the ledger. In such embodiments, the full un-hashed pseudonymic identity may be received and verified by one or more nodes that maintain the blockchain ledger, which one or more nodes optionally also then publish a hash of the pseudonymic identity to the ledger. Therefore, in some instances, publishing the pseudonym identity can comprise publishing the complete pseudonymic identity or may comprise publishing a hash of the pseudonym identity. Publishing a hash of the pseudonymic identity is particularly advantageous in cases where quantum computing is practically achievable and non-quantum secure encryption algorithms have been used to create the pseudonymic identities; in such cases, publishing the un-hashed pseudonymic identity on a blockchain or elsewhere could comprise its security.

The user can generate further pseudonymic identities in this generation, i.e. based on h_{MAX}, by creating further re-randomisations or re-encryptions H"_{MAX}, H"_{MAX-1}, creating V" using an integer *y"* arbitrarily selected from a finite range of C possible values (wherein the integer is not *y'*) and constructing corresponding proof π"_{E}. This process can be repeated until C pseudonymic identities have been generated from h_{MAX}.

The pseudonymic identity may be employed to sign messages or transactions, if it comprises one or more associated private keys. These private keys do not form part of the data construct itself and are therefore not published. The pseudonymic identity may also comprise one or more public keys, e.g. within its data structure. These one or more public keys can be used by third parties to verify messages or transacts that have been carried out using the private key associated with the pseudonymic identity. Therefore, a pseudonymic identity according to the invention may comprise one or more public keys in its data structure and/or the pseudonymic identity may comprise one or more associated private keys. A pseudonymic identity may also act as a tag or marker, for instance in files generated by a given system or in images generated by a given camera. A given file or image can be queried to reveal other files or images produced by said system or camera.

### Performing a grouping query

Given that a plurality of users may each be able to create a plurality of pseudonymic identities in a generation, each up to a maximum of C, a large number of pseudonymic identities may have been established. Due to the re-randomisation / re-encryption involved in producing H'_{MAX}, H"_{MAX}, etc, and due to the distinct *y'*, *y"*, etc, values involved in producing each of V', V", etc, it is not possible for any observer to tell (without having knowledge of the hidden values) which pseudonymic identities were established by which user (i.e. which are based on a common hidden value h₀). In particular, it cannot yet be established, for any two given pseudonymic identities, whether they were established (and hence are controlled or owned) by the same user (i.e. are based on a common hidden value h or h₀).

At some stage (which may occur before said first generation is "full", i.e., before the maximum number C of pseudonymic identities has been generated), a third party may wish to perform a grouping (or identification) query on a given pseudonymic identity of interest. As discussed above, a grouping query is a query that can be executed which takes, as input, an indication of a specific pseudonymic identity and returns, as output, all of the pseudonymic identities established by the same underlying user (i.e. based on the same root hidden value h₀) as that specific pseudonymic identity prior to execution of the query. For example, such a query may be beneficial if a pseudonymic identity is associated with a cryptocurrency wallet from which a suspicious transaction has been detected and it is desired to find the other wallets owned by the same user for further review; such a query may also be beneficial when a pseudonymic identity is associated with a social media account found to have posted violent and/or inflammatory content in order to ascertain which other accounts may have been set up by the same user. However, at this stage, it is desirable not to reveal the user's personal information (e.g. their identity) unless there is good reason to do so, e.g., as evidenced by the results of the grouping query.

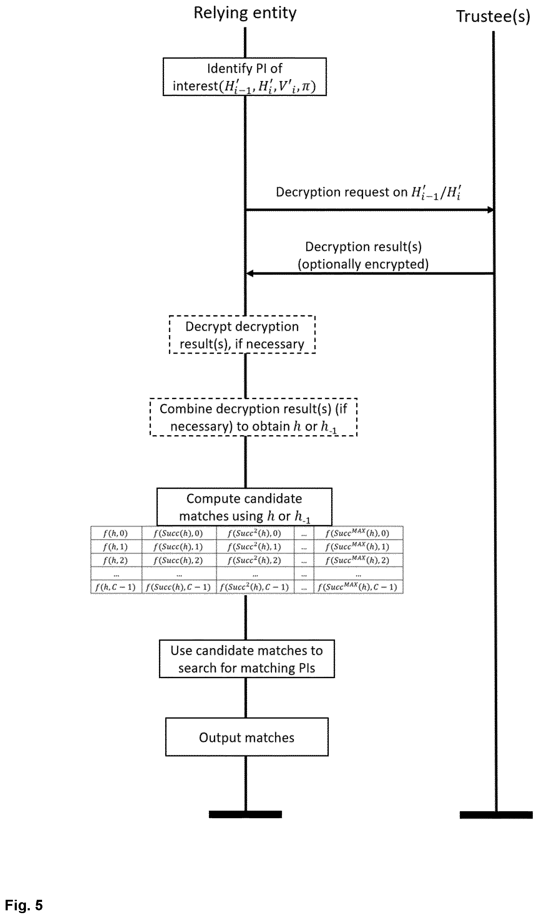

As shown in Fig. 5, to perform the grouping query on a given pseudonymic identity (say, some data structure or construct containing H'_{MAX}, H'_{MAX-1}, V' and π'_{E}), the third party publishes its grouping query to a ledger (e.g., a distributed ledger such as a blockchain) that is monitored by one or more trustees. These could be a set of trustees participating in a threshold decryption scheme - the trustees detect the request when it is submitted to the ledger and perform any necessary checks, and then (if satisfied) decrypt the required value (e.g. concealing value H'_{MAX}); for instance, each may perform its own partial decryption of the value and then providing the result to the third party, who can then combine the partial decryptions to obtain the final decrypted result (here, the hidden value h_{MAX}). The trustee entities may provide the result of their decryption as an encrypted message published to the ledger; the third party will already have, or will be provided, the necessary private key to decrypt the messages from the trustees. In some instances, the pseudonymic identity will have been published in the form of a hash value; thus, if a third party wishes to perform a grouping query (e.g., after observing suspicious or abusive behaviour associated with the hash of the pseudonymic identity), they may need to interact with one or more nodes maintaining a blockchain ledger to uncover the full (un-hashed) pseudonymic identity. In such cases, the un-hashed pseudonymic identity may be sent directly to the one or more trustees without being published. In the event that quantum computing can be practically used, the trustees may encrypt their messages using a plausibly quantum-secure encryption algorithm; alternatively, they can send their messages directly to the third party rather than publishing them.

The "checks" performed may include verifying that the grouping query is authentic (e.g., comes from an authorised third party) and/or that the pseudonymic identity being queried exists. The checks may further include verifying that no generation of the protocol has been "*skipped*"*.* For instance, the present pseudonymic identity comprises H'_{MAX}, H'_{MAX-1}. If h_{MAX} has not yet been revealed by a decryption request, then the grouping query should be an attempt to uncover linked pseudonymic identities in the first generation (i.e. those associated with h_{MAX}) rather than to uncover linked pseudonymic identities in the second generation (i.e. those associated with h_{MAX-1}). Therefore, the one or more trustees may only consider a request to decrypt some H'ᵢ valid if another hᵢ₊₁ has already been revealed through a decryption request and/or if a hidden value associated with all earlier generations has already been revealed The check performed by the trustees therefore prevents the hidden value being revealed prematurely, e.g., before the appropriate generation of pseudonymic identities had been generated. Prematurely revealing a hidden value may be problematic as it denies the user's right to privacy for new pseudonymic identities created after a blind-regroup query, and/or preventing them from validly establishing new pseudonymic identities.

After obtaining the decrypted value h_{MAX}, the third party uses it to search the space of all known pseudonymic identities to find those which are a "match" for h_{MAX}. Since h_{MAX} is the last value in the sequence that is directly used to create pseudonymic identities (in this example, h_{MAX+1} was only used to create V_{Setup}), this searching need only involve computing all of the C different possible values of #(h_{MAX} ++ y) for y = 0, 1, ..., C-1, and checking these computed values against the linking value V of the known pseudonymic identities. Known algorithms for, e.g., ledger searching can be used for this process. The skilled person would be readily able to implement a suitable search strategy. For completeness, it is noted that the C refers to the total number of different possible values for y rather than to a sequence starting from zero and ending at C-1. That is, the value y may be selected from a total number C of values, which may be presented as a sequence of consequence integers, non-consequence integers, or may not form a sequence at all. The C different possible values may be defined in the given framework in which the pseudonymic identity is created so that a querier will know which values of y to test.

If the pseudonymic identity in question is not a first generation pseudonymic identity, the decrypted hidden value will be h_{MAX-β} depending on how many rounds β of grouping queries / decryption requests have occurred. Therefore, for the grouping query to reveal all co-owned pseudonymic identities, the task of computing the relevant linking values V involves not only trying each different possible value for y in #(h_{MAX-β} ++ y), but also computing the "*forward*" hidden values h_{MAX-(β-1)}, h_{MAX-(β-2)} ... h_{MAX} and trying each possible value for y in #( h_{MAX-(β-1)} ++ y), #( h_{MAX-(β-2)} ++ y), and so forth. The third party will be able to obtain these previously revealed hidden values h_{MAX-(β-1)} to h_{MAX} from, e.g., a ledger if they had been previously stored on reveal. Alternatively, the third party can compute them by applying the successor function to h_{MAX-β} at least once to regenerate the forward sequence of hidden values. If h_{MAX} had not been stored on reveal, the third party can establish when they have reached h_{MAX} by testing their generated h values by calculating V using the same function that had been used to calculate V_{Setup} (e.g. *V = #*(*h*_{*MAX+*1} + + 0)) and comparing the computed value to the V_{Setup} found on the ledger; if the tested value matches, they have reached *h*_{*MAX+*1} and therefore found *h_{MAX}*.

Once all of the matches for the decrypted hidden value (and, where relevant, its successor hidden values) have been found (including accounting for all y values, i.e., the whole range of finite integers), the query outputs these matches as its result.

The above discussion relates to a grouping query submitted in respect of a pseudonymic identity of a generation that has not yet had its associated hidden value revealed (e.g., the pseudonymic identity is in the first generation and hidden value h_{MAX} has not been revealed). However, meaningful query results can still be obtained even if the pseudonymic identity is of a generation that has already had its associated h value revealed by a grouping query. This is because the pseudonymic identities of this embodiment comprise a value H' and a value H'₋₁. In particular, if H' has already been decrypted to reveal a value hᵢ, but hᵢ₋₁ (the hidden value associated with the next generation of pseudonymic identities) has not yet been revealed, then it is still possible to decrypt H'₋₁ to reveal hᵢ₋₁. In such cases, the query can be regarded as a "*follow-up*" query. In this specific embodiment, the request would be for the decryption of the value H'_{MAX-1} in the pseudonymic identity, thereby revealing the next hidden value, h_{MAX-1}, in order to ascertain the identities of any new pseudonymic identities established by the same owner as the previously-queried pseudonymic identity since the execution of that previous query.

### Establishing or creating a pseudonymic identity after at least one grouping query has been made

In this specific embodiment, the process for creating a pseudonymic identity in a generation after the first generation, i.e. after at least one grouping query has been performed is largely identical to the process for creating a pseudonymic identity in the first generation, i.e. if no grouping queries have been performed.

In particular, the user creates an nth generation pseudonymic identity (i.e. associated with h_{MAX-(n-1)}) by re-randomising H_{MAX-(n-1)} to obtain H'_{MAX-(n-1)}, re-randomising H_{MAX-(n)} to obtain H'_{MAX-(n)}, and creating linking value V' which is V' = *#*(*h*_{*MAX-*(*n-*1)} + + *y'*). The user also creates the one or more ZK Establish proofs π'_{E} in the same manner as discussed above. However, in this specific embodiment, the user must also prove that they have not skipped a generation of pseudonymic identities; that is the one or more ZK Establish proofs π'_{E} will need to comprise proof that all preceding generations have been subject to a grouping query. This can be proved in different ways. For instance, when the grouping query in respect of the preceding generation was performed, the third party making the query or the trustee(s) actioning the decryption request may have provided a token or value signifying that the generation had been subject to a grouping query; the proof may therefore comprise proof that this token or value exists. Alternatively, or in addition, the proof may highlight the evidence of n-1 grouping queries having taken place. In all cases, the proof may be a zero-knowledge proof having the characteristics and/or being of the types discussed herein.

Additional pseudonymic identities in the nth generation may be created in the same manner as described for the first generation.

### Alternative approaches to enabling generations

As described above, PI generations are enabled by utilising a sequence of hidden values h₀ to h_{MAX}, wherein each hidden value of the sequence corresponds to a generation. Given that each hidden value h of the sequence is derived from a deterministic one-way function applied to the preceding hidden value h, the order of the sequence of hidden values also corresponds to the order of the generations. That is to say, the first generation may correspond to h_{MAX}, the second generation to h_{MAX-1} and so on.

As an alternative, a collection of hidden values h₀,hₐ, ...h_{z} may be used instead. Each of hidden values hₐ...h_{z} may each be derived from h₀ by application of different deterministic one-way functions to h₀. In this way, hₐ, ...h_{z} may all be deterministically linked to h₀ but there may not be a clear order to them. In such scenarios, the user may select a hidden value h of values hₐ, ... h_{z} to create a pseudonymic identity from, provided that all later pseudonymic identities of the same generation also use the same hidden value h, at least until hidden value h is revealed by a decryption request. The pseudonymic identity must still contain proof that the H' value is correctly derived from a hidden value h, which is itself correctly derived from a root hidden value h_{0,} which itself has been approved as valid.

Accordingly, generations can be enabled by constructing hidden values h₀, hₐ, ...h_{z}, wherein hₐ, ...h_{z} are deterministically derived from h₀. This can include sequences such as h₀ to h_{MAX} where each sequence value is deterministically derived from the preceding sequence value (here, h_{MAX} is still deterministically derived from h₀ through repeated applications of the same deterministic one-way function) or by deterministically deriving hₐ, ...h_{z} from h₀ by applying a plurality of different deterministic one-way functions to h₀. In all cases, the collection of hidden values are all deterministically linked to h₀. Combinations of these approaches may be used, as may other approaches, provided that the hidden values remain deterministically linked to h₀.

### Non-generational pseudonymic identities

The above discussion related to generational pseudonymic identities. However, non-generational pseudonymic identities can also be implemented. This can be achieved by using a single root hidden value h₀, without any requirement to create further hidden values e.g. hₐ, ...h_{z} derived from h₀. Proof can be sent to the issue entity that a given value (e.g. V or H) is derived from h₀ and that h₀ has been validly constructed; the issue entity can then approve the given value as discussed earlier. Pseudonymic identities can then be constructed by re-randomising H or re-encrypting h₀ to obtain H'. The linking value V' can be constructed as already discussed using h₀ and the one or more proofs π can be constructed in much the same way as discussed above. For instance, the one or more proofs π may comprise proof that H' is correctly generated from h₀ and that h₀ has been approved, e.g. by reference to the approved given value. As with the other discussed proofs throughout, this proof can be zero-knowledge.

The above detailed disclosure outlines the features of specific embodiments of the present invention. In addition, some (but by no means all) variants of the specific embodiment that might be implemented whilst still falling under the scope of the present invention are also described. Where features are described in one example but not another, the skilled person is able to combine these examples and features, unless otherwise stated.

The methods and system architectures described herein may be executed on any device incorporating a processor, such as a computer, a mobile phone, tablet, PDA, local network, cloud-network or similar. The processor is able to execute instructions that are stored in associated memory, in order to carry out the described steps. The processor may comprise more than one core, and/or may be running on a virtual machine. In some instances, the processor may be a series of processors in a distributed computing system, such as computers on a network. If distributed, part or all of the methods may be executed on different processors, cores or networks. If the methods are performed on more than one processor, the plurality of processors they are performed on may be owned by different entities. For instance, a subset of the required method steps may be performed by a first processor owned by a first entity, and another subset may be performed by a second processor owned by a second entity different from the first.

It will be appreciated that the above disclosure provides specific examples of certain implementations of the invention, and that modifications can be made within the scope of the appendant claims. Such modifications will similarly seize upon the advantages of the method and system for outlined here in respect of privacy and data security will also be apparent to those skilled in the art, and the individual scenarios outlined herein should not be considered as being limiting. The appended claims define the scope of the invention.

### The following examples of the invention are provided.

As has been discussed above, during the initialising phase an issue entity (which can be more than one entity) may review a proof that a given value (e.g. and H and/or a V value) generated by a user is correctly constructed with respect to a root hidden value h₀; the issue entity may also be sent this value. The given value, which is hereafter termed α for convenience, can have many different relations with respect to h₀ and the proof can accordingly take many different forms. Some examples of these relationships and proofs are provided in Examples A below.

### [Examples A]

1. A scenario wherein there exists H and/or V_{Setup}, wherein H and/or Vₛₑₜᵤₚ is generated using a cryptographic function applied to a hidden value h, wherein hidden value h is, or is derived at least from, a root hidden value h_{0.}
2. The scenario of Example 1, wherein the one or more proofs π comprises proof that there exists H and/or V_{Setup}, wherein H and/or V_{Setup} is generated using a cryptographic function applied to a hidden value h, wherein hidden value h is, or is derived at least from root hidden value h₀.
3. The scenario of example 1 or 2, wherein H exists and is generated using a cryptographic function applied to the hidden value h, wherein hidden value h is, or is derived at least from, root hidden value h_{0.}
4. The scenario of any preceding example, wherein H is generated by encrypting the hidden value h or wherein H is an encryption of hidden value h
5. The scenario of Example 4, wherein the one or more proofs π comprises proof that H is generated by encrypting the hidden value h or wherein H is an encryption of hidden value h.
6. The scenario of Example 4 or 5, wherein H is generated by encrypting the hidden value h using the public key of one or more trustee entities.
7. The scenario of Example 6, wherein H is or was generated by encrypting the hidden value h using a threshold decryption scheme using a threshold public key for the plurality of trustee entities.
8. The scenario of Example 5, wherein H is or was generated by encrypting the hidden value h₀ using a dynamic threshold decryption scheme.
9. The scenario of any preceding example, wherein root hidden value h₀ is derived using randomness contributed by a user and/or randomness contributed by an issue entity.
10. The scenario of Example 9, wherein the one or more proofs π comprises proof that root hidden value h₀ is derived using randomness contributed by a user and/or randomness contributed by an issuing entity.
11. The scenario of any preceding example, wherein root hidden value h₀ is derived using a random, pseudorandom, or arbitrary value nonce_{Issuer} generated by an issuing entity.
12. The scenario of example 11, wherein the one or more proofs π comprises proof that root hidden value h₀ is derived using a random, pseudorandom, or arbitrary value nonce_{Issuer} generated by an issuing entity.
13. The scenario of any preceding example, wherein root hidden value h₀ is derived using a random, pseudorandom, or arbitrary value nonce_{Issuer} generated by an issuing entity and a random, pseudorandom, or arbitrary value nonce_{User} generated by a user.
14. The scenario of example 13, wherein the one or more proofs π comprises proof that root hidden value h₀ is derived using a random, pseudorandom, or arbitrary value nonce_{Issuer} generated by an issuing entity and a random, pseudorandom, or arbitrary value nonceᵤₛₑᵣ generated by a user.
15. The scenario of any of examples 11 to 14, wherein root hidden value h₀ is derived at least from a deterministic one-way initialising function applied to nonce_{Issuer}.
16. The scenario of example 15, wherein the one or more proofs π comprises proof that root hidden value h₀ is derived at least from a deterministic one-way initialising function applied to nonce_{Issuer}.
17. The scenario of any of examples 11 to 16, wherein root hidden value h₀ is derived at least from a deterministic one-way initialising function applied to nonce_{Issuer} and nonce_{User}.
18. The scenario of example 17, wherein the one or more proofs π comprises proof that root hidden value h₀ is derived at least from a deterministic one-way initialising function applied to nonce_{Issuer} and nonce_{User}.
19. The scenario of any of examples 11 to 18, wherein the deterministic one-way initialising function comprises a cryptographic hash function and/or a modular exponentiation function.
20. The scenario of any preceding example, wherein there exists or there is generated a collection of hidden values h₀, hₐ, ...h_{z} wherein hₐ, ... h_{z} are derived deterministically from root hidden value h₀, wherein h is any one of hidden values h₀, hₐ, ...h_{z}.
21. The scenario of example 20, wherein the one or more proofs π comprises proof that there exists a collection of hidden values h₀, hₐ, ...h_{z} wherein hₐ, ... h_{z} are derived deterministically from h₀, wherein h is any one of hidden values h₀, hₐ, ...h_{z}
22. The scenario of any preceding example, wherein there exists or there is generated a sequence of hidden values h₀, ..., h_{MAX} comprising root hidden value h₀ and a final hidden value h_{MAX}, wherein each hidden value of the sequence is deterministically derived at least from root hidden value h₀, wherein h is any of hidden values h₀, ..., h_{MAX}.
23. The scenario of example 22, wherein the one or more proofs comprises that there exists a sequence of hidden values h₀, ..., h_{MAX} comprising root hidden value h₀ and a final hidden value h_{MAX}, wherein each hidden value of the sequence is deterministically derived at least from root hidden value h₀, wherein h is any of hidden values h₀, ..., h_{MAX}.
24. The scenario of examples 22 or 23, wherein h_{MAX} is derived at least from h₀ by iterative applications of a deterministic one-way successor function to root hidden value h₀.
25. The scenario of example 24, wherein the one or more proofs π comprises proof that h_{MAX} is derived at least from root hidden value h₀ by iterative applications of a deterministic one-way successor function to root hidden value h_{0.}
26. The scenario of any of examples 22 to 25, wherein each hidden value (hᵢ₊₁) aside from root hidden value h₀ is or was derived by applying the deterministic one-way successor function to the previous value (hᵢ) in the sequence.
27. The scenario of example 26, wherein the one or more proofs π comprises proof that each hidden value (hᵢ₊₁) aside from root hidden value h₀ is derived by applying the deterministic one-way function to the previous value (hᵢ) in the sequence.
28. The scenario of any of examples 22 to 27, wherein the sequence comprises at least two plaintext values h₀, h_{MAX}.
29. The scenario of example 28, wherein the one or more proofs π comprises proof that the sequence comprises at least two plaintext values h₀, h_{MAX}.
30. The scenario of any of examples 22 to 29, wherein the sequence comprises at least three plaintext values h₀, h₁, h_{MAX}.
31. The scenario of example 30, wherein the one or more proofs π comprises proof that the sequence comprises at least three plaintext values h₀, h₁, h_{MAX}.
32. The scenario of any of examples 22 to 31, wherein h_{MAX+1} exists, wherein h_{MAX+1} is derived by applying the deterministic one-way successor function to h_{MAX.}
33. The scenario of any of examples 22 to 32, wherein H_{MAX-1} is derived from encrypting the sequence value hᵢ preceding h_{MAX.}
34. The scenario of example 33, wherein the one or more proofs π comprises proof that H_{MAX-1} is derived at least from encrypting the sequence value hᵢ preceding h_{MAX}.
35. The scenario of any of examples 19 to 34, wherein the deterministic one-way successor function comprises a hash function and/or a modular exponentiation function.
36. The scenario of example 35, wherein the one or more proofs π comprises proof that the deterministic one-way function comprises a hash function and/or a modular exponentiation function.
37. The scenario of any of examples 19 to 36, wherein the successor function computes g^#(hᵢ₋₁), where g is a group generator, ^ is a modular exponentiation function, # is a cryptographic hash function, and hᵢ₋₁ is the previous sequence value.
38. The scenario of example 37, wherein the one or more proofs π comprises proof that the successor function computes g^#(hᵢ₋₁), where g is a group generator, ^ is a modular exponentiation function, # is a cryptographic hash function, and hᵢ₋₁ is the previous sequence value.
39. The scenario of any preceding example, wherein V_{Setup} exists, wherein V_{Setup} is derived at least from a deterministic one-way linking function applied to h.
40. The scenario of example 39, wherein the one or more proofs π comprises proof that V_{Setup} exists, wherein V_{Setup} is derived at least from a deterministic one-way function applied to h.
41. The scenario of example 39 or 40, wherein V_{Setup} is derived at least from a deterministic one-way function applied to a combination of h and another value y.
42. The scenario of example 41, wherein the one or more proofs π comprises proof that V_{Setup} is derived at least from a deterministic one-way function applied to a combination of h and another value y.
43. The scenario of example 41 or 42, wherein the combination is a concatenation.
44. The scenario of example 43, wherein the one or more proofs π comprises proof that the combination is a concatenation.
45. The scenario of any of examples 39 to 44, wherein h is h₀, h_{MAX} or h_{MAX+1}.

From the issuer's perspective, an initialising protocol may comprise the following [B] examples. An entity other than the issue entity may assist with, or entirely perform, some of the steps of these methods. The issue entity may comprise one or more entities, optionally wherein each of these entities performs different steps of the method.

### [Examples B]

1. A computer-implemented method for initialising a verified cryptographically linkable value suitable for use in creating a certified pseudonymic identity, the method comprising:
   receiving at least one value α generated by a user, wherein the at least one value α is derived at least from or relates to a value h₀;
   receiving one or more proofs π that assert that the at least one value α is derived at least from or is related to h₀;
   verifying the one or more proofs π to confirm that the at least one value α is derived at least from or is related to h₀; and
   in response to the verification succeeding, indicating approval of the at least one value α.
2. The method of example 1, wherein indicating approval of the at least one value α comprises informing the user of the approval of the at least one value α
3. The method of example 1 or 2, wherein indicating approval of the at least one value α comprises generating a blockchain transaction and/or publishing the approval to a ledger.
4. The method of any preceding [B] example, wherein indicating approval of the at least one value α comprises generating data indicative of the approval of the at least one value α.
5. The method of example 4, wherein the data indicative of the approval of the at least one value α comprises a cryptographic signature.
6. The method of any preceding [B] example, wherein V_{Setup} exists according to any of Examples A39 to A45 and wherein the proof π comprises proof according to any of examples A39 to A45, wherein the at least one value α comprises V_{Setup}.
7. The method of any preceding [B] example, wherein H exists according to any of Examples A1 to A38 and wherein the proof π comprises proof according to any of examples A1 to A38, wherein the at least one value α comprises H.
8. The method of any preceding [B] example, wherein the method comprises generating, and providing to the user, a random, pseudorandom, or arbitrary value nonce_{Issuer}.
9. The method of any preceding [B] example, wherein the method further comprises receiving a cryptographic commitment from a user, committing the user to a random, pseudorandom, or arbitrary value nonce_{User}.
10. The method of any preceding [B] example, wherein the proof is a zero-knowledge proof.
11. The method of example 10, wherein the zero-knowledge proof does not reveal h₀ and/or any of the hidden values deterministically derived at least from h₀.
12. The method of examples 10 or 11, wherein the zero-knowledge proof is non-interactive and/or succinct.
13. The method of any of examples 10 to 12, wherein the zero-knowledge proof comprises a ZK-SNARK or a ZK-STARK.
14. The method of any preceding [B] example, wherein the at least one value α has been generated in accordance with a predetermined protocol requiring use of publicly available parameters and wherein verifying the one or more proofs π employs publicly available parameters or values relating to the predetermined protocol.
15. The method of any preceding example, when dependent on example 6, wherein the method comprises, in response to the verification succeeding, publishing V_{Setup}.
16. The method of example 15, wherein publishing V_{Setup} comprises publishing V_{Setup} to a blockchain ledger, and optionally to a leaf of a Merkle tree on the blockchain.
17. The method of any preceding [B] example, wherein the method comprises receiving personal information from the user and verifying the personal information prior to indicating approval of the at least one value α and/or prior to providing nonce_{Issuer}.
18. The method of example 17, wherein the method further comprises associating the verified personal information with a first set of data, and storing the association between the first set of data and verified personal information.
19. The method of example 17 or 18, wherein the method further comprises encrypting the first set of data using the public key of a trustee entity or a plurality of trustee entities using a threshold decryption scheme and issuing the encrypted first set of data D to the user.

From the user's perspective, an issuing protocol may comprise the following [C] examples. An entity other than the user may assist with, or entirely perform (e.g. if contracted to by the user), some of the steps of these methods. The user may comprise one or more entities, optionally wherein each of these entities performs different steps of the method.

### [Examples C]

1. A computer-implemented method for initialising a verified cryptographically linkable value suitable for use in creating a certified pseudonymic identity, the method comprising:
   generating at least one value α, wherein the least one value α is derived at least from or relates to a value h₀;
   generating one or more proofs π that the least one value α is derived at least from or relates to a value h₀; and
   providing the one or more proofs π to an issuing entity for the issuing entity to verify the one or more proofs π and approve the at least one value α.
2. The method of example 1, comprising receiving an indication of the approval of the at least one value α.
3. The method of any preceding [C] example, wherein receiving an indication of the approval of the at least one value α comprises receiving data indicative of the approval of the at least one value α.
4. The method of example 3, wherein data indicative of the approval of the at least one value α comprises a cryptographic signature.
5. The method of any preceding [C] example, wherein the method further comprises storing said data indicative of the approval of the at least one value α.
6. The method of any preceding [C] example, wherein the at least one value α comprises V_{Setup}, wherein V_{Setup} has been generated, or the method comprises generating V_{Setup}, according to any of Examples A39 to A45 and wherein the one or more proofs π is created according to any of examples A39 to A45.
7. The method of any preceding [C] example, wherein the at least one value α comprises H, wherein H has been generated, or the method comprises generating H, according to any of Examples A1 to A38 and wherein the one or more proofs is created according to any of examples A1 to A38.
8. The method of any preceding [C] example, comprising receiving nonce_{Issuer} generated by the issuer.
9. The method of any preceding [C] example, comprising creating nonce_{User},
10. The method of 9, further comprising creating a cryptographic commitment which acts to commit the user to nonce_{User}, and sending the cryptographic commitment to the issuer.
11. The method of any preceding [C] example, comprising sending personal information to the issuer for verification.
12. The method of example 11, comprising receiving an encrypted first set of data D, wherein the first set of data is associated with the verified personal information, and wherein the encryption has been performed using the public key of a trustee entity.
13. The method of any preceding [C] example, wherein the one or more proofs π is a zero-knowledge proof.
14. The method of example 13, wherein the zero-knowledge proof does not reveal any of the hidden values which relate to H.
15. The method of examples 13 or 14, wherein the zero-knowledge proof is non-interactive and/or succinct.
16. The method of any of examples 13 to 15, wherein the zero-knowledge proof comprises a ZK-SNARK or a ZK-STARK.
17. The method of any preceding [C] example, wherein the at least one value α has been generated in accordance with a predetermined protocol and verifying the one or more proofs π employs publicly available parameters or values relating to the predetermined protocol.

An establish protocol may include the following [D] examples and may be carried out entirely, or at least in part, by the user. The user may also contract another one or more entities to carry out these method. Any of the [D] examples may be combined with any of the [B] or [C] examples; when combined, the [D] example may precede or may proceed the [B] or [C] example.

### [Examples D]

1. A computer-implemented method for creating a pseudonymic identity based on a root hidden value h₀, the method comprising:
   generating a value V' which is derived at least from the root hidden value h₀;
   generating a value H' which is derived at least from the root hidden value h₀ in a different manner to V';
   generating one or more proofs π_{E} that proves that V' and/or H' is derived at least from root hidden value h₀; and
   creating a data structure comprising V', one or more proofs π_{E} and H', wherein the data structure acts as the pseudonymic identity.
2. The method of example 1, wherein there exists at least one value α derived at least from root hidden value h₀ according to examples A1 to A45.
3. The method of example 2, wherein the at least one value α has previously been indicated as approved according to any one of the methods of examples B1 to B19 and C1 to C17.
4. The method of example 2, wherein the method comprises verifying and approving the at least one value α according to any one of the methods of examples B1 to B19 and C1 to C17.
5. The method of any of examples 2 to 4, wherein the one or more proofs π_{E} proves that there exists at least one value α derived at least from h₀, wherein the at least one value α has been indicated as approved.
6. The method of any of examples 2 to 5, wherein the one or more proofs π_{E} proves that the at least one value α is derived at least from the same h₀ as V' and/or H'.
7. The method of any preceding [D] example, where there exists a value H, wherein H is an encryption of h₀, wherein generating value H' comprises a) re-randomising value H or b) re-encrypting h₀.
8. The method of any preceding [D] example, wherein generating V' comprises applying a deterministic one-way linking function to h₀.
9. The method of example 8, wherein generating V' comprises applying the deterministic one-way function after combining h₀ with a value y, optionally wherein combining h₀ with the value y comprises concatenating h₀ with the value y .
10. The method of example 9, wherein y is arbitrarily chosen from a finite range of integers.
11. The method of any one of examples 4 to 6, wherein the deterministic one-way linking function comprises a cryptographic hash function.
12. The method of any of examples 1 to 6, 10, and 11, wherein there exists a collection of hidden values h_{0,} h_{a,}...h_{z}, wherein each of hidden values h_{a,}...h_{z} is derived by applying a deterministic one-way function to h₀, and wherein H' and/or V' is generated from one of h_{a,}...h_{z,} optionally wherein at least two of hidden values h_{a,}...h_{z} are generated by applying different deterministic one-way functions to h₀.
13. The method of any of examples 1 to 6, 10, and 11, wherein there exists a sequence of hidden values h₀, h₁, ..., h_{MAX}, wherein h₀ is the first sequence value and h_{MAX} is the last sequence value, wherein h₁ to h_{MAX} are deterministically derived at least from h₀, optionally wherein each of h₁ to h_{MAX} is generated by application of a deterministic one-way successor function to the preceding hidden value in the sequence.
14. The method of example 13, wherein a number β of the hidden values of the sequence of hidden values h₀, h₁, ..., h_{MAX} may have already been revealed in order of h_{MAX} to h₀, optionally wherein β number of decryption requests have occurred in respect of the sequence of hidden values h₀, h₁, ..., h_{MAX}.
15. The method of example 14, wherein the method comprises determining the number β of hidden values already revealed.
16. The method of example 14 or 15, wherein generating the value H' a) comprises re-randomising an existing value H, wherein H is an encryption of hidden value h_{MAX-β} or b) comprises re-encrypting h_{MAX-β}.
17. The method of any of examples 14 to 16, wherein generating V' comprises applying a deterministic one-way linking function to h_{MAX-β}.
18. The method of example 17, wherein generating V' comprises applying the deterministic one-way linking function after combining h_{MAX-β} with a value y, optionally wherein combining h_{MAX-β} with the value y comprises concatenating h_{MAX-β} with the value y.
19. The method of example 18, wherein the value y is arbitrarily selected from a finite range of integers, optionally wherein each hidden value of the sequence represents a generation of certified pseudonymic identities, wherein a total number C of certified pseudonymic identities can be created using a given h₀ in each generation, and wherein the number of integers in said finite range equals C.
20. The method of any of examples 14 to 18, wherein the method further comprises generating a value H'₋₁ by a) rerandomizing an existing value H₋₁, wherein H₋₁ is an encryption of the hidden value h_{MAX-(β+1)} which precedes h_{MAX-β} in the sequence, or b) re-encrypting hidden value h_{MAX-(β+1)}.
21. The method of example 19, wherein the data structure additionally comprises H'₋₁.
22. The method of examples 14 to 20, wherein if β is greater than zero, generating the one or more proofs π_{E} comprises generating proof that β hidden values of the sequence have been revealed and/or that H' is the encryption of h_{MAX-β}.
23. The method of any preceding [D] example, comprising receiving or obtaining an encrypted first set of data D, wherein the first set of data encrypts an association with verified personal information, wherein the data structure comprises, optionally re-randomised, encrypted first set of data D.
24. The method of any preceding [D] example, wherein the one or more proofs π_{E} are zero knowledge proofs.
25. The method of example 24, wherein the zero-knowledge proof does not reveal any of the hidden values.
26. The method of examples 24 or 25, wherein the zero-knowledge proof is non-interactive and/or succinct.
27. The method of any of examples 24 to 26, wherein the zero-knowledge proof comprises a ZK-SNARK or a ZK-STARK.
28. The method of any preceding [D] example, wherein the method further comprises publishing the data structure or submitting it to a ledger, optionally a blockchain ledger.
29. The method of example 28, wherein V' is published to a leaf of a Merkle tree, optionally wherein the Merkle tree is hosted on the blockchain ledger.
30. The method of any preceding [D] example, wherein the method further comprises generating a public signing key and/or the data structure comprises a public signing key.
31. The method of any preceding [D] example, wherein there already exists a pseudonymic identity having a data structure comprising values H" and V", wherein H" and V" are also derived at least from the root hidden value h₀, wherein H" is different to H' and V" is different to V'.
32. The method of any of examples 1 to 31, wherein the method further comprises creating a further pseudonymic identity having a data structure comprising values H‴ and V‴, wherein H‴ and V‴ are also derived at least from the root hidden value h₀, wherein H‴ is different to H' and V‴ is different to V', wherein H‴ and V‴ are created according to any of the methods of examples 1 to 30.
33. A data structure as created in any of examples 1 to 32.
34. A computer-readable medium comprising the data structure of example 33.
35. A non-transitory storage medium comprising the data structure of example 33.
36. A distributed computing environment comprising the data structure of example 33.

A grouping query may be performed by an interested party in respect of a given pseudonymic identity and may comprises the methods of the following [E] examples. The interested party may comprise one or more entities. One or more trustee entities may also be involved in the method to, e.g., decrypt an encrypted value; these trustee entities may be an active part of the method or they may not be. In the case that a trustee entity is not an active part of the method, the method may simply sending and/or receiving information to/from the one or more trustees, without the steps taken by the trustee explicitly or actively forming part of the method.

### [Examples E]

1. A computer-implemented method for linking pseudonymic identities within a collection of pseudonymic identities PI₁...PIₙ, each pseudonymic identity PIᵢ comprising a value Vᵢ and at least one encrypted value, wherein Vᵢ and the at least one encrypted value are both derived at least from a hidden value h₀, the method comprising:
   receiving an indication of a pseudonymic identity PIⱼ in the collection;
   triggering a decryption request based on the indicated pseudonymic identity to obtain a decrypted value;
   computing, using the decrypted value, one or more candidate matches for values (V₁, ..., Vₙ) of pseudonymic identities in the collection; and
   identifying a subset of the collection, said subset comprising each pseudonymic identity PIₖ that contains one of the candidate matches; and
   outputting the identified subset.
2. The method of any preceding [E] example, wherein pseudonymic identity PIⱼ has been generated according to any one of the methods of Examples D1 to D32.
3. The method of any preceding [E] example, wherein for each pseudonymic identity in the collection, the value Vᵢ is unique.
4. The method of any preceding [E] example, wherein for each pseudonymic identity in the collection, the or each encrypted value is unique.
5. The method of any preceding [E] example, wherein the decryption request is sent to at least one trustee entity.
6. The method of any preceding [E] example, wherein the decryption request relates to a multiparty decryption scheme or a threshold decryption scheme.
7. The method of any preceding [E] example, wherein the decryption request is made by a relying party.
8. The method of any preceding [E] example, wherein the decryption request is published to a ledger to be actioned by one or more trustee entities.
9. The method of any preceding [E] example, wherein triggering a decryption request based on the indicated pseudonymic identity to obtain a decrypted value comprises the one or more trustee entities publishing an encrypted message to a ledger, wherein the relying party possesses the necessary private key to decrypt the encrypted message.
10. The method of any preceding example, when dependent on example 6, wherein triggering a decryption request based on the indicated pseudonymic identity to obtain a decrypted value requires that at least a threshold number of trustees publishes an encrypted message to a ledger, wherein the decrypted messages together provide the decrypted value.
11. The method of any preceding [E] example, wherein computing the one or more candidate matches comprises applying a deterministic one-way function to the decrypted value.
12. The method of any preceding [E] example, wherein computing the one or more candidate matches comprises applying a deterministic one-way function to the decrypted value after combining it, optionally concatenating it, with a value y.
13. The method of example 12, wherein the value y value is an integer selected from a finite range of integers, optionally wherein the number of integers in the finite range of integers is equal to C, wherein C is the total number pseudonymic identities that can be created using a given h₀ in each generation.
14. The method of example 13, wherein computing the one or more candidate matches comprises computing, for each integer in the finite range of integers, the result of applying the deterministic one-way function to the decrypted value after combining it with said integer.
15. The method of any preceding [E] example, wherein the PIⱼ has been generated according to any one of the methods of examples D12 to D32, when dependent on D12, wherein the decrypted value is a hidden value of the sequence of hidden values, and wherein computing the one or more candidate matches further comprises applying a deterministic one-way successor function to the decrypted value to determine one or more previously revealed hidden values.
16. The method of any preceding [E] example, wherein computing the one or more candidate matches further comprises computing each of the one or more previously revealed hidden values.
17. The method of any preceding [E] example, wherein computing the one or more candidate matches comprises iteratively applying the one-way successor function to the decrypted value.

### Additional Examples [F]

1. A computer program product comprising instructions that when executed carry out the method of any of examples B1 to B19, C1 to C17, D1 to D32, or E1 to E17.
2. A computer-readable medium comprising instructions that when executed carry out the method of any of examples B1 to B19, C1 to C17, D1 to D32, or E1 to E17.
3. A data carrier signal carrying the computer program product of example 1.
4. A processor configured to perform the method of any of examples B1 to B19, C1 to C17, D1 to D32, or E1 to E17.
5. A non-transitory storage medium comprising instructions to carry out the method of any of examples B1 to B19, C1 to C17, D1 to D32, or E1 to E17.
6. A system comprising a processor configured to configured to perform the method of any of examples B1 to B19, C1 to C17, D1 to D32, or E1 to E17.
7. A distributed system comprising multiple processors collectively configured to perform the method of any of examples B1 to B19, C1 to C17, D1 to D32, or E1 to E17.

## Claims

1. A computer-implemented method for initialising a verified cryptographically linkable value suitable for use in creating a certified pseudonymic identity, the method comprising:
receiving at least one value α generated by a user, wherein the at least one value a is derived at least from or relates to a root hidden value h₀;
receiving one or more proofs π that assert that the at least one value α is derived at least from or is related to h₀;
verifying the one or more proofs π to confirm that the at least one value α is derived at least from or is related to h₀; and
in response to the verification succeeding, indicating approval of the at least one value α.

2. A computer-implemented method for initialising a verified cryptographically linkable value suitable for use in creating a certified pseudonymic identity, the method comprising:
generating at least one value α, wherein the least one value α is derived at least from or relates to a root hidden value h₀;
generating one or more proofs π that the least one value α is derived at least from or relates to a value h₀; and
providing the one or more proofs π to an issuing entity for the issuing entity to verify the one or more proofs π and approve the at least one value α.

3. The method of claim 1 or 2, wherein:
root hidden value h₀ is derived at least from a random, pseudorandom, or arbitrary value nonce_{Issuer} selected or generated by an or the issuing entity and/or a random, pseudorandom, or arbitrary value nonce_{User} selected or generated by a or the user, optionally
wherein root hidden value h₀ is derived at least from a deterministic one-way initialising function applied to nonce_{Issuer} and nonce_{User} and further optionally,
wherein the one or more proofs π comprises proof that root hidden value h₀ is derived using nonce_{Issuer} and nonce_{User}, optionally by a deterministic one-way initialising function applied to nonce_{Issuer} and nonce_{User}.

4. The method of any of claims 1 to 3, wherein there exists a sequence of hidden values h₀,..., h_{MAX} comprising root hidden value h₀ and a final hidden value h_{MAX}, wherein each hidden value of the sequence aside from h₀ is derived at least from a deterministic one-way function applied to the previous value (hᵢ) in the sequence, optionally
wherein the one or more proofs comprises proof that there exists a sequence of hidden values h₀, ..., h_{MAX} comprising root hidden value h₀ and a final hidden value h_{MAX}, wherein each hidden value of the sequence aside from h₀ is derived at least from a deterministic one-way function applied to the previous value (hᵢ) in the sequence

5. The method of claim 4, wherein the at least one value α comprises a value V_{Setup}, wherein Vₛₑₜᵤₚ is generated from application of a deterministic one-way function to a hidden value h of the sequence h₀,..., h_{MAX}, and optionally,
wherein the one or more proofs π comprises proof that V_{Setup} exists and that V_{Setup} is derived at least from a deterministic one-way function applied to a hidden value h of the sequence h₀,..., h_{MAX}.

6. The method of any of claims 3 to 5, wherein the at least one value α comprises a value H, wherein H is an encryption of a hidden value h of the sequence of hidden values h₀,..., h_{MAX}, optionally
wherein the encryption of hidden value h uses the public key of one or more trustee entities, and/or
wherein the one or more proofs π comprises proof that H exists and that H is an encryption of hidden value h.

7. A computer-implemented method for creating a pseudonymic identity based on a root hidden value h₀, the method comprising:
generating a value V' which is derived at least from the root hidden value h₀;
generating a value H' which is derived at least from the root hidden value h₀ in a different manner to V';
generating one or more proofs π_{E} that proves that V' and/or H' is derived at least from root hidden value h₀; and
creating a data structure comprising V', the one or more proofs π_{E} and H', wherein the data structure acts as the pseudonymic identity.

8. The method of claim 7, wherein the one or more proofs π_{E} proves that there exists at least one value α derived at least from h₀, wherein the at least one value α has been indicated as approved, optionally
wherein the one or more proofs π_{E} proves that the at least one value α is derived at least from the same h₀ as V' and/or H'.

9. The method of claim 7 or 8, wherein there exists a sequence of hidden values h₀, h₁, ..., h_{MAX,} wherein h₀ is the first sequence value and h_{MAX} is the last sequence value, wherein h₁ to h_{MAX} are deterministically derived at least from h₀, optionally wherein each of h₁ to h_{MAX} is generated by application of a deterministic one-way successor function to the preceding hidden value in the sequence.

10. The method of claim 9, wherein a number β of the hidden values of the sequence of hidden values h₀, h₁, ..., h_{MAX} may have already been revealed in order of h_{MAX} to h₀, and wherein:
wherein generating the value H' a) comprises re-randomising an existing value H, wherein H is an encryption of hidden value h_{MAX-β} or b) comprises re-encrypting h_{MAX-β}, and/or
wherein generating V' comprises applying a deterministic one-way linking function to h_{MAX-β}, optionally after combining h_{MAX-β} with a value y.

11. The method of any preceding claim, wherein the one or more proofs π or π_{E} comprises or is a zero knowledge proof, and optionally wherein the zero-knowledge proof comprises or is a ZK-SNARK or a ZK-STARK.

12. A data structure as created by any of claims 7 to 11, wherein the data structure acts as a pseudonymic identity.

13. A computer-implemented method for linking pseudonymic identities within a collection of pseudonymic identities PI₁...PIₙ, each pseudonymic identity PIᵢ comprising a value Vᵢ and at least one encrypted value, wherein Vᵢ and the at least one encrypted value are both derived at least from a hidden value h₀, the method comprising:
receiving an indication of a pseudonymic identity PIⱼ in the collection;
triggering a decryption request based on the indicated pseudonymic identity to obtain a decrypted value, optionally wherein the encrypted value is decrypted by one or more trustee entities;
computing, using the decrypted value, one or more candidate matches for values V₁, ..., Vₙ of pseudonymic identities in the collection; and
identifying a subset of the collection, said subset comprising each pseudonymic identity PIₖ that contains one of the candidate matches; and
outputting the identified subset.

14. The method of claim 13, wherein the decrypted value is a hidden value h of a collection of hidden values hₐ to h_{z}, wherein each of hₐ to h_{z} is deterministically derived at least from a root value h₀, wherein computing one or more candidate matches further comprises computing the one or more candidate matches for any previously revealed hidden values of the collection hidden values hₐ to h_{z}, and/or,
wherein identifying a subset of the collection comprises searching the collection of pseudonymic identities, using a search algorithm, for pseudonymic identities PIₖ containing one of the candidate matches

15. A computer-readable medium comprising instructions that when executed carry out the method of any of claims 1 to 11, 13, and 14 or that contains the data structure of claim 12.
